Europäisches Patentamt

European Patent Office

Office européen des brevets

(11) Publication number: **0 416 579 A2**

# EUROPEAN PATENT APPLICATION

(21) Application number: 90117080.3

(51) Int. Cl.5: **G11B 23/087**

(22) Date of filing: 05.09.90

(30) Priority: 07.09.89 JP 231962/89
07.09.89 JP 105271/89

(43) Date of publication of application:
13.03.91 Bulletin 91/11

(84) Designated Contracting States:
DE GB

(71) Applicant: Hitachi Maxell Ltd.
No 1-1-88, Ushitora Ibaraki-shi
Osaka-fu(JP)

(72) Inventor: Kagano, Shinichi
35-3, Shirie, Oyamazaki-cho
Otokuni-gun, Kyoto-fu(JP)

Inventor: Nakatamari, Syunji
10-3, Hyuga-cho
Takatsuki-shi, Osaka-fu(JP)
Inventor: Shiba, Hitoshi
Koyoryo, 1, Koizumi, Oyamazaki-cho
Otokuni-gun, Kyoto-fu(JP)
Inventor: Matsuki, Tadao
39-1-1010, Ooshima 7-chome, Koutou-ku
Tokyo-to(JP)

(74) Representative: Selting, Günther, Dipl.-Ing. et
al
Patentanwälte von Kreisler, Selting, Werner
Deichmannhaus am Hauptbahnhof
W-5000 Köln 1(DE)

(54) A tape cartridge having a cartridge case with two-layer structure in cross section thereof.

(57) A magnetic recording tape cartridge comprises a case body 1 having a pair of drive shaft inserting openings defined therein for holding tape reel hubs winding a magnetic tape, wherein at least peripheral portions of the drive shaft inserting openings in the case body 1 have a two-layer structure composed of inner and outer walls in cross section thereof combined as one body with each other. Boss member is formed as one body with the inner wall, projected inwardly from the circumference of the opening for regulating the movement of the tape reel hub. Projection member is formed as one body with the inner wall, projected outwardly from the root of the boss member for forming the outer peripheral portion of the opening, so that the entire portion of the surrounding wall of the drive shaft inserting opening is integrally formed as one body with only the inner wall member.

*Fig. 2*

# A TAPE CARTRIDGE HAVING A CARTRIDGE CASE WITH TWO-LAYER STRUCTURE IN CROSS SECTION THEREOF

## BACKGROUND OF THE INVENTION

### FIELD OF THE INVENTION

The present invention relates to a magnetic recording tape cartridge, and more particularly to a magnetic recording tape cartridge having a cartridge case body with a two-layer structure composed of inner and outer walls in cross section thereof.

### DESCRIPTION OF THE PRIOR ART

As a tape cartridge of this kind, there has been disclosed a tape cartridge in the Japanese Utility Model Publication Sho-12875 for example, wherein a cartridge case 1 made of plastic material has a wall composed of inner and outer layers 7 and 8 in cross section thereof, the inner and outer layers 7 and 8 being integrally combined as one body by using a method of bicolor injection molding. According to this conventional tape cartridge, the cartridge case 1 can be molded with a high accuracy by setting the thickness of the wall composed of the inner and outer layers 7 and 8 thinned respectively. Moreover, when the inner layer 7 and outer layer body 8 are integrally molded as one body with different kinds of plastic materials respectively, there is an advantage that a cartridge case body can be obtained at a low price with various effective features of the respective molding materials.

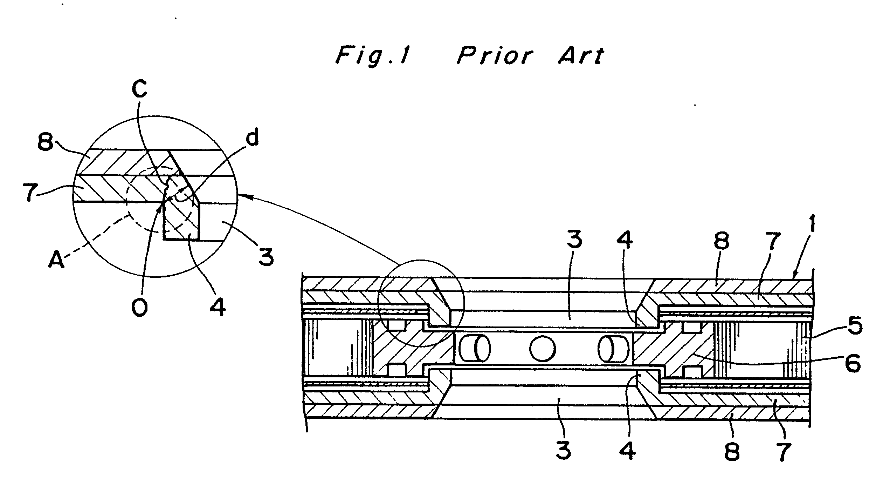

However, in the cartridge case 1 molded as mentioned above, it was found that there occurs a problem in strength in the cartridge case 1 as follows. That is to say, as shown in Fig. 1, in the cartridge case 1 composed of inner and outer walls 7 and 8, there are defined a pair of drive shaft inserting openings 3 and there are formed upper and lower bosses 4 in a ring shaped manner integrally molded as one body with the inner walls 7 projected inwardly from the circumference walls of the drive shaft inserting openings 3, for regulating the movement of tape reel hubs 6. Since the thickness of the inner wall 7 is thinned to a degree of generally half of the standard thickness of the case body, when a circle is drawn around its center point corresponding to the inner edge corner O, on the root portion of the boss 4, folded at right angles between the inner wall 7 and the boss 4 with the radius of d (shown by a broken line A), a portion of the outer wall 8 as well as a portion of the inner wall 7 is included in the circle A, and therefore, the strength of the root portion of the boss 4 becomes weak. By this reason, when a shock load of the tape reel hub 6 is applied to the boss 4, there often occurs a crack C due to a concentration of stress in the root portion of the boss 4 so that the boss 4 is apt to be damaged.

## SUMMARY OF THE INVENTION

The present invention has been devised in order to solve the problem mentioned above, and an essential object of the present invention is to provide a magnetic recording tape cartridge having an improvement of a structure of inner and outer walls in a peripheral portion of each drive shaft inserting opening defined in a cartridge case body, improving the strength of a root portion of a surrounding wall of the drive shaft inserting opening so as to prevent an occurrence of a crack.

In order to attain the object mentioned above, a magnetic recording tape cartridge comprises a case body composed of top and bottom halves each having a pair of drive shaft inserting openings defined therein for holding tape reel hubs winding a magnetic tape, wherein at least peripheral portions of the drive shaft inserting openings in the case body are formed of two-layer members composed of inner and outer plastic walls in cross section thereof combined as one body with each other. And boss member is formed as one body with the inner wall, projected inwardly from the circumference of each of the drive shaft inserting openings for regulating the movement of the tape reel hub. Projection member is formed as one body with the inner wall, projected outwardly from the root of the boss member for forming the outer peripheral portion of an aperture of each of the drive shaft inserting openings, whereby the entire portion of the surrounding wall of each of the drive shaft inserting openings is integrally formed as one body with only the inner wall member, so that the outer surface of the circumference of the aperture of each of the openings is formed by exposing a partial portion of the inner wall.

According to a feature of the present invention, the thickness between the root portion of the boss member and the outer top surface of the outwardly projected portion can be made large, whereby the strength of the corresponding portion can be secured so as to prevent the occurrence of such a crack.

The features of the present invention which are believed to be novel are set forth with particularity in the appended claims. The present invention together with further objects and advantages thereof may best be understood with reference to the following detailed description, taken in conjunction with the accompanying drawings.

## BRIEF DESCRIPTION OF THE DRAWINGS

Fig. 1 is a cross sectional view of an essential part of a conventional tape cartridge.

Figs. 2 and 3 show an embodiment of a tape cartridge according to the present invention, wherein

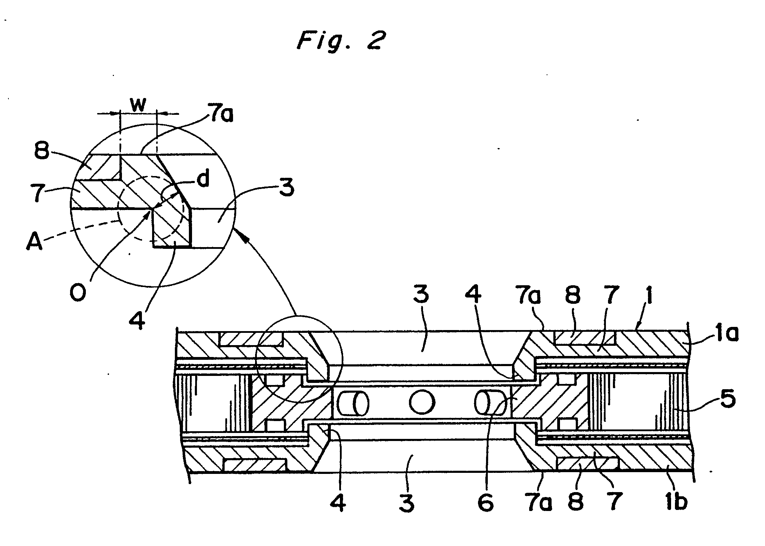

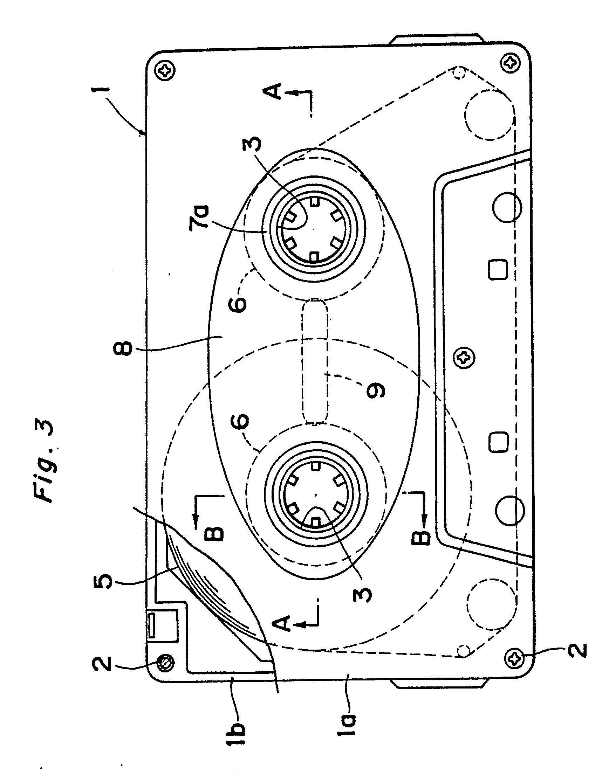

Fig. 2 is a cross sectional view along the line B-B shown in Fig. 3, and

Fig. 3 is a plan view showing an entire part of a tape cartridge with a partial cut portion.

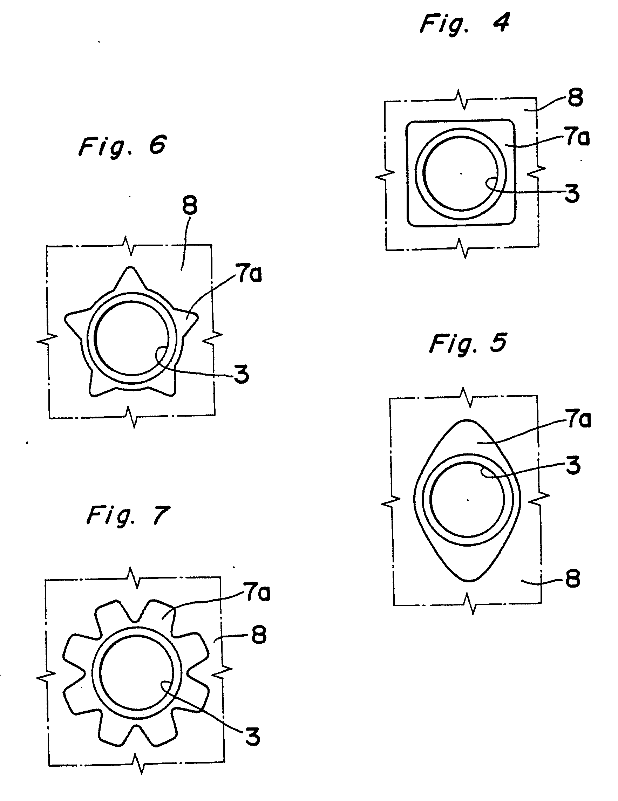

Figs. 4 to 7 are plan views each showing an essential part of other embodiments of a tape cartridge according to the present invention.

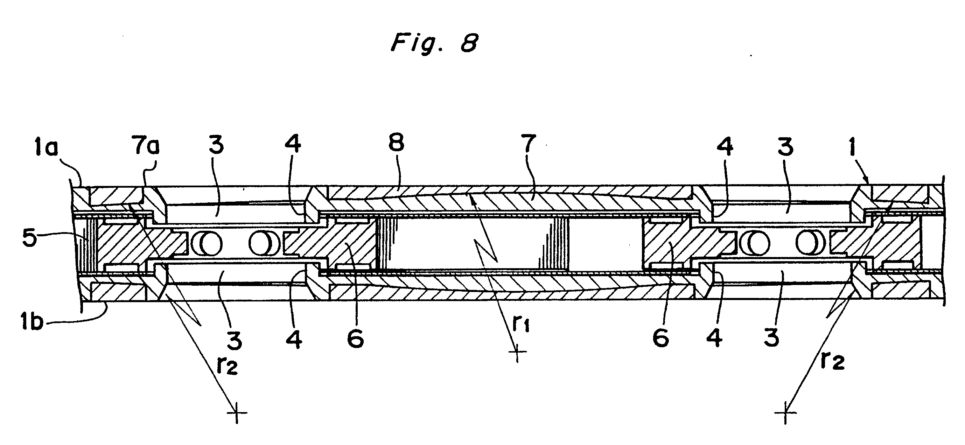

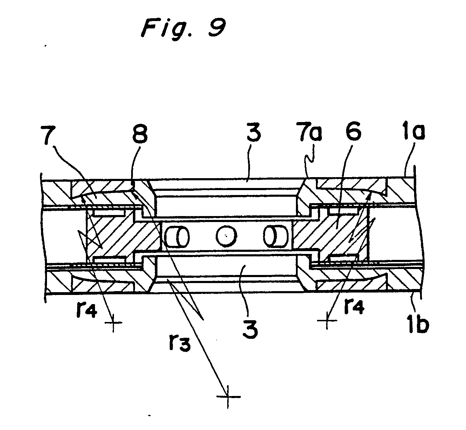

Figs. 8 and 9 show another embodiment of a tape cartridge according to the present invention, wherein

Fig. 8 is a cross sectional view showing an essential part cutting along the line A-A in Fig. 3, and

Fig. 9 is a cross sectional view showing an essential part cutting along the line B-B in Fig. 3.

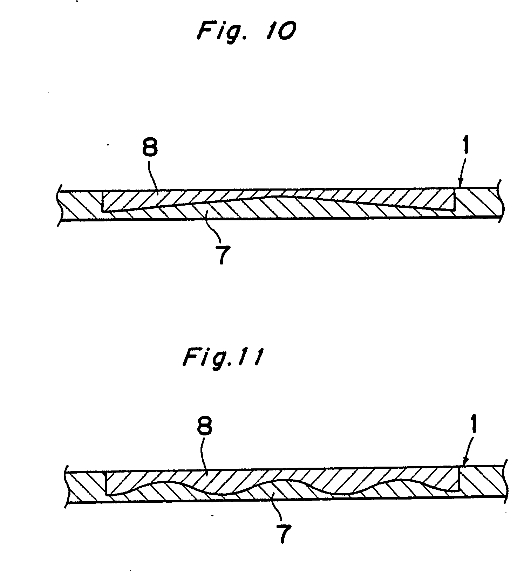

Figs. 10 and 11 are cross sectional views each showing an essential part of another embodiment of a tape cartridge according to the present invention.

## DETAILED DESCRIPTION OF THE PREFERRED EMBODIMENT

Preferred embodiments of a magnetic recording tape cartridge of the present invention will be described with reference to Figs. 2 to 11 hereinafter.

In the tape cartridge of the present invention, as shown in Figs. 2 and 3, there are defined a pair of right and left drive shaft inserting openings 3 in a cartridge case 1, and a peripheral side wall surrounding each of the openings 3 is formed by integrally forming a pair of upper and lower ring shaped boss members 4 each projected inwardly as one body with the inner wall 7. The entire part of the case body or at least the peripheral portion of the drive shaft inserting openings 3 in the cartridge case 1 is composed of inner and outer walls 7 and 8 respectively made of different plastic materials combined by molding as one body with each other, wherein the boss member 4 and the entire portion of the side wall surrounding the drive shaft inserting opening 3 are both formed as one body with the inner wall 7. The surrounding portion of the outer circumference surface of the aperture of the drive shaft inserting opening 3 is formed by exposing a surface of a projected portion 7a projected outwardly as one body with the inner wall 7 from the root portion of the boss member 4.

According to a feature of the present invention, the thickness between the root portion O of the boss 4 and the outer top surface of the projected portion 7a can be made larger than that in the conventional one shown in Fig. 1 where there may occur a crack, whereby the strength of the corresponding portion can be secured so as to prevent the occurrence of such a crack.

## EXAMPLE 1

As shown in Figs. 2 and 3, the cartridge case body 1 is composed of top and bottom halves 1a and 1b made of plastic material which are integrally combined by means of screws for example in a butting manner. In the intermediate right and left portions of the top and bottom halves 1a and 1b, there are defined a pair of right and left drive shaft inserting openings 3. Each opening 3 is defined by a pair of upper and lower ring shaped boss members 4 which are inwardly projected in a manner of opposing each other integrally formed as one body with the top and bottom halves 1a and 1b respectively. In the drive shaft inserting opening 3, there is rotatably accommodated a tape reel whose hub member 6 for winding a tape 5 is held between the upper and lower boss members 4, in other words, the vertical and horizontal movement of the hub 6 is regulated by the upper and lower boss members 4. Each of the peripheral portions of the drive shaft inserting openings 3 defined in the top and bottom halves 1a and 1b has a two-layer structure in cross section composed of inner and outer walls 7 and 8 which are integrally combined as one body through a bicolor injection molding. In this cartridge case, for example, the outer wall 8 is made of transparent plastic material from a viewpoint of the design and the inner wall 7 is made of plastic material with good rigidity because the inner surface of the inner wall 7 defines a tape feeding path. As a preferred embodiment of the combination of the inner and outer walls 7 and 8, the inner wall 7 is made of colored plastic resin material such as ABS resin or PS resin material, while the outer wall 8 is made of transparent plastic resin material such as AS resin material. Moreover, the outer wall 8 may be made of translucent resin material such as PP resin material and the inner wall 7 may be made of colored resin material which is made by adding filler such as calcium carbonate to PP resin material. Otherwise, various kinds of plastic materials are used in combination according to the usage of the cartridge case.

The ring shaped boss member 4 surrounding the drive shaft inserting opening 3 is integrally projected as one body with the inner wall 7 and also a projection portion 7a surrounding the aperture of the drive shaft inserting opening 3 is integrally projected outward as one body with the inner wall 7. That is to say, the entire portion of the circumference wall surrounding the drive shaft inserting opening 3 is integrally formed as one body with the inner wall 7 and the outer top surface of the projection portion 7a formed as one body with the inner wall 7 is exposed for forming the outer top circumference surface surrounding the aperture of the opening 3. The inner surface of the side wall surrounding the aperture of the opening is inclined in a manner that the diameter of the opening becomes wider to the top surface thereof, while the inner surface of the boss member 4 surrounding the opening 3 is formed to be vertical. In comparison with the conventional cartridge case shown in Fig. 1, in this example 1 shown in Fig. 2, when a circle A is drawn round the center point O with the radius of d which is the distance between the center point O and the inclined surface of the side surface surrounding the aperture of, the opening 3, only the edge portion of the inner wall 7 is included in the circle A and a portion of the outer wall 8 is excluded from the circle A.

When the thickness of the cartridge case 1 is set to 1.5mm for example, the width w of the exposed surface of the projected portion 7a surrounding the opening 3 is designed generally 1mm.

As described above, in this example 1, since the peripheral portion of the drive shaft inserting opening 3 defined in the cartridge case 1 has a two-layer structure in cross section composed of inner and outer walls 7 and 8, the thickness of the projected portion 7a, i.e., the distance between the root portion O of the boss 4 and the outer top surface of the projected portion 7a can be made larger than that in the conventional one shown in Fig. 1, whereby the strength of the corresponding portion can be substantially secured so as to prevent an occurrence of a crack. Moreover, the exposed projection 7a of the inner wall 7 is accentual in design. Although the outer top surface of the projected portion 7a is formed to be a ring shape in top plan view surrounding the circular aperture of the opening 3 as shown in Fig. 3, it is not limited to this and various shapes may be employed as the shape of outer surface of the projected portion 7a as shown in Figs. 4 to 7.

In addition, in Fig. 3, when the inner wall 7 is made of opaque plastic resin, there is formed a window portion 9 in the intermediate portion of the inner wall 7 under the outer wall 8 for watching the amount of the wound tape.

As described above, according to the tape cartridge of the present invention, in the peripheral portion composed of inner and outer walls 7 and 8 surrounding the drive shaft inserting opening 3 defined in the cartridge case 1, the strength of the root portion of the boss member 4 can be secured so as to improve the durability of the cartridge case.

## MODIFIED EXAMPLE 2

In the example 1, only the peripheral portion of the drive shaft inserting opening in the cartridge case 1 has a two-layer structure in cross section composed of inner and outer walls 7 and 8, and the other portion of the cartridge case 1 including the circumference wall surrounding the drive shaft inserting opening is formed of only the inner wall 7. On the other hand, in the modified example 2, the portions of the cartridge case 1 except the peripheral portions of the drive shaft inserting openings in the cartridge case 1 may be composed of only the outer wall 8.

Moreover, the entire portion of the cartridge case 1 except the circumference wall surrounding the drive shaft inserting opening may be composed of inner and outer walls 7 and 8 in cross section.

## MODIFIED EXAMPLE 3

A modified example 3 is shown in Figs. 8 to 11, wherein the structure in cross section of the peripheral portion of each of the drive shaft inserting openings 3 defined in the top and bottom halves 1a and 1b has a two-layer structure composed of inner and outer walls 7 and 8 integrally combined by bicolor injection molding, which is similar to those in the examples 1 and 2. The different point from the examples 1 and 2 is in that, the inner wall 7 is made of colored plastic material and the outer wall 8 is made of transparent or translucent plastic material, and that the interface between the inner wall 7 and the outer wall 8 is made uneven or curved.

In concrete, as shown in Fig. 8, the interface between the inner wall 7 and the outer wall 8 is formed by curved surfaces with radiuses $r_1$ and $r_2$ of curvature ($r_1 < r_2$). Moreover, as shown in Fig. 9, the interface is formed by a curved surface with a radius $r_3$ of curvature and by another curved surface with a radius $r_4$ of curvature ($r_3 > r_4$). Further-

more, the interface between the inner and outer walls 7 and 8 may be formed to be mountainlike as shown in Fig. 10, and may be formed to be wavelike as shown in Fig. 11.

In this example 3, since the cartridge case 1 has a two-layer structure composed of inner and outer walls 7 and 8, the bonding ability between the two walls 7 and 8 can be improved. Moreover, since the outer wall 8 is made of transparent or translucent plastic material, the light is irregularly reflected by the uneven interface between two walls 7 and 8, whereby erroneous confirmation of the amount of the wound tape can be prevented as far as possible. Moreover, the inner wall 7 is made of colored plastic material with the outer wall 8 made of transparent or translucent plastic material, so that the color of the thick portions of the outer wall 8 is deepened and the thin portions thereof become light so as to shade the cartridge case, obtaining a solid appearance with improvement of the design thereof.

MODIFIED EXAMPLE 4

Although the inner and outer walls 7 and 8 are integrally combined as one body by bicolor injection molding in the examples 1 to 3, the inner and outer walls 7 and 8 may be individually molded, thereafter the two walls 7 and 8 may be combined as one body. In this case, as the combining means of the inner and outer walls 7 and 8, the two walls 7 and 8 may be combined with each other by utilizing adhesive means as well as engagement means.

Claims

1. A magnetic recording tape cartridge comprising a case body composed of top and bottom halves each having a pair of drive shaft inserting openings defined therein for holding a tape reel hub winding a magnetic tape,
at least peripheral portions of said drive shaft inserting openings in said case body being formed of two-layer members composed of inner and outer walls respectively made of different plastic materials in cross section thereof combined as one body with each other,
boss member being formed in a ring shaped manner as one body with said inner wall, projected inwardly by folding the edge portion of said inner wall at right angles, forming the side wall of each of said drive shaft inserting openings, for regulating the movement of said tape reel hub,
projection member being formed in a ring shaped manner as one body with said inner wall, projected outwardly from the root portion of said boss member, forming the outer peripheral portion of an aperture of each of said drive shaft inserting openings,
whereby the entire portion of the surrounding wall of each of said drive shaft inserting openings is integrally formed as one body with said inner wall so that a partial portion of said inner wall is exposed for forming the outer surface of the circumference of the aperture of each of said openings.

2. The tape cartridge according to claim 1, wherein said inner wall is made of opaque plastic resin material and said outer wall is made of transparent plastic resin material.

3. The tape cartridge according to claim 2, wherein said inner wall is made of colored resin material and said outer wall is made of translucent resin material.

4. The tape cartridge according to claim 2, wherein said inner wall is made of ABS resin or PS resin material and said outer wall is made of AS resin material.

5. The tape cartridge according to claim 3, wherein said outer wall is made of PP resin material and said inner wall of colored resin material is made by adding filler to PP resin material.

6. The tape cartridge according to claim 1, wherein the interface between said inner wall and said outer wall is made uneven or curved.

7. The tape cartridge according to claim 6, wherein said interface between the inner and outer walls is formed by curved surfaces with radiuses of curvature different from each other.

8. The tape cartridge according to claim, 6, wherein said interface between the inner and outer walls is formed to be mountainlike or wavelike.

Fig.1  Prior Art

Fig. 2

Fig. 3

Fig. 4

Fig. 6

Fig. 5

Fig. 7

*Fig. 8*

EP 0 416 579 A2

## Fig. 9

Fig. 10

Fig.11